(19) Europäisches Patentamt
European Patent Office
Office européen des brevets

(11) **EP 3 441 915 A1**

(12) **EUROPÄISCHE PATENTANMELDUNG**

(43) Veröffentlichungstag:
**13.02.2019 Patentblatt 2019/07**

(51) Int Cl.:
**G06Q 10/04** (2012.01)

(21) Anmeldenummer: **17185450.8**

(22) Anmeldetag: **09.08.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Schnittger, Jens**
  **91475 Lonnerstadt (DE)**
• **Braun, Ulrich**
  **90431 Nürnberg (DE)**
• **Thurau, Oliver**
  **67117 Limburgerhof (DE)**

(54) **VERFAHREN ZUR OPTIMIERUNG VON CHARGENPROZESSEN, COMPUTERPROGRAMM MIT EINER IMPLEMENTIERUNG DES VERFAHRENS UND NACH DEM VERFAHREN ARBEITENDES SYSTEM**

(57) Die Erfindung ist ein Verfahren zur Optimierung von Chargenprozessen, ein Computerprogramm (32) mit einer Implementierung des Verfahrens und ein nach dem Verfahren arbeitendes System, wobei im Rahmen des Verfahrens automatisch zumindest ein Anlagenbelegungsgraph (26), zumindest ein Produktionsmengenbereich, Kandidatenmengen $M_K^{(R)}$, $C_K^{(R)}$, $C_K$, optimale Chargengrößen und eine optimale Chargenanzahl auf Basis einer der Kandidatenmengen $M_K^{(R)}$, $C_K^{(R)}$, $C_K$ sowie ein optimaler Zeitplan zur Abarbeitung aller Aufträge auf von einem Anlagenbelegungsgraph (26) referenzierten Anlagenteilen (12-15) ermittelt werden.

FIG 7

**Beschreibung**

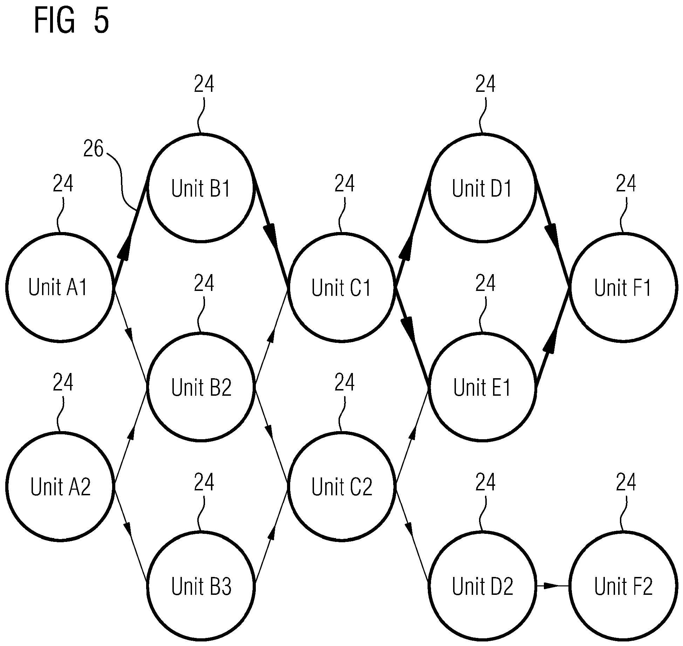

Die Erfindung betrifft das technische Gebiet der Chargenproduktion und grundsätzlich das Problem einer Ermittlung optimaler Chargengrößen sowie einer optimalen Zuweisung von Anlagenteilen für eine vorgegebene Anzahl von Aufträgen, die innerhalb eines gemeinsamen, vorgebbaren Dispositionszeitraums abzuarbeiten sind. Jeder Auftrag enthält dabei genau ein zu produzierendes Rezept. Das Rezept wird produziert durch einen Prozess mit einer Reihe von Prozessschritten, die jeweils auf einem Anlagenteil ausgeführt werden. Dabei muss es sich nicht um eine lineare Sequenz handeln, sondern es kann ein allgemeiner gerichteter Graph vorliegen (vgl. FIG 5).

Speziell bei umfangreichen Produktionsanlagen mit einer Vielzahl von alternativ zur Abwicklung eines Chargenprozesses in Betracht kommenden Anlagenteilen ist eine Ermittlung optimaler Chargengrößen sowie eine optimale Ermittlung von jeweils zu verwendenden Anlagenteilen ein Problem von erheblicher kombinatorischer Komplexität. Die Komplexität wird noch erhöht, wenn weitere Randbedingungen berücksichtigt werden sollen.

Im Stand der Technik sind Lösungen für das sogenannte Maschinenbelegungsproblem oder das Maschinenbelegungsproblem mit parallelen Maschinen bekannt. Eine solche Lösung kann hier aufgrund der zusätzlich zu ermittelnden optimalen Chargengröße nicht verwendet werden, denn dieser zusätzliche Parameter verhindert eine Lösung mit akzeptabler Rechenzeit.

Nach dem hier vorgeschlagenen Ansatz wird zur Ermittlung einer optimalen Anlagenbelegung und einer optimalen Chargengröße eine Unterteilung vorgeschlagen, derart, dass zunächst in einem ersten Schritt mögliche Anlagenbelegungen für das zu produzierende Rezept für den jeweiligen Auftrag ermittelt werden und dann in einem anschließenden Schritt eine optimierte Chargengröße ermittelt wird. Schließlich werden die so definierten Möglichkeiten an einen automatischen Ablaufplaner (Scheduler) übergeben zur Erstellung eines optimierten Ablaufplans.

In dem ersten Schritt entstehen für unterschiedliche mögliche Anlagenbelegungen entsprechende Anlagenbelegungspläne (ohne Zeitinformation).

Die Anlagenbelegungspläne müssen einzelnen Randbedingungen genügen. Zu relevanten Randbedingungen gehören insbesondere Randbedingungen, welche sicherstellen, dass mittels eines im Rahmen des Anlagenbelegungsplans ausgewählten Anlagenteils der jeweilige Prozessschritt abgewickelt werden kann. Bei einer im Rahmen des Chargenprozesses notwendigen Erhitzung eines Produkts, Zwischenprodukts, Ausgangsprodukts oder Ausgangsstoffs muss das jeweilige Anlagenteil zum Beispiel dafür eingerichtet sein, eine Temperaturänderung zu bewirken und auch dafür eingerichtet sein, eine Temperaturänderung in dem notwendigen Umfang und innerhalb einer vorgegebenen Zeitspanne zu bewirken. Des Weiteren muss ein Anlagenteil zur Aufnahme eines jeweils erforderlichen Volumens des jeweiligen Produkts, eines eventuellen Zwischenprodukts oder einzelner oder mehrerer Ausgangsprodukte oder Ausgangsstoffe geeignet sein.

Die resultierenden Anlagenbelegungspläne werden mittels eines Schedulers verarbeitet und das Ergebnis ist die gewünschte optimale Anlagenbelegung. Der zentrale Aspekt der hier vorgeschlagenen Neuerung besteht in der Art und Weise der Trennung des Chargengrößenproblems von dem Scheduling-Problem. Die erreichte Trennung erlaubt eine Optimierung der Chargengröße zeitlich vor dem Scheduling. Aufgrund dessen verbleibt für den Scheduler noch eine gewisse Flexibilität bei der Auswahl einzelner Anlagenteile. Für den Scheduler und dessen Erstellung eines Zeitplans für eine kollisionsfreie Anlagenbelegung wird hier keine Lösung angegeben, denn ein Scheduler mit einer solchen Funktionalität ist bereits bekannt und nach dem hier vorgeschlagenen Ansatz ist vorgesehen, einen solchen Scheduler für die die Optimierung abschließende Erstellung von kollisionsfreien Zeitplänen als Ergebnis der Lösung des Scheduling-Problems zu verwenden.

Nachfolgend werden zunächst die oben erwähnten Randbedingungen erläutert. Die Randbedingungen unterteilen sich in statische Randbedingungen und dynamische Randbedingungen:

A Statische Randbedingungen

Statische Randbedingungen sind per Definition zeitinvariant und können folglich vor dem Scheduling behandelt werden. Demgemäß werden sie im Rahmen des Verfahrens zuerst betrachtet.

1. Tauglichkeitsspezifische Randbedingungen

Eine Vorrichtung (ein Anlagenteil, eine Maschine etc.) muss für einen bestimmten Prozessschritt (Rühren, Heizen, Kühlen etc.) eines Chargenprozesses tauglich sein, um im Rahmen des Chargenprozesses verwendet werden zu können. Eine Säure kann zum Beispiel nur in einem Behälter aus einem der Säure widerstehenden Material oder in einem Behälter mit einer Beschichtung aus einem der Säure widerstehenden Material gelagert und/oder verarbeitet werden.

### 2. Transferspezifische Randbedingungen

Transferspezifische Randbedingungen beschreiben die Möglichkeiten (oder Einschränkungen), Material im Rahmen des Chargenprozesses von einem Anlagenteil zu einem anderen Anlagenteil zu fördern. Dafür werden die zwischen zumindest zwei Anlagenteilen bestehenden Verbindungen (die im Folgenden ebenfalls unter dem Oberbegriff "Anlagenteil" zusammengefasst werden) berücksichtigt. Beispiele für solche Verbindungen sind Rohrleitungen, Transportbänder und dergleichen. Über einzelne Verbindungen können nur Feststoffe transportiert werden, über andere Verbindungen nur Flüssigkeiten. Für einen Transport von gasförmigem Material sind spezielle Verbindungen in Form von Rohrleitungen oder dergleichen notwendig. Eine zwischen zwei Anlagenteilen bestehende und eine Förderung von Material zwischen diesen beiden Anlagenteilen erlaubende Verbindung ist eine statische Randbedingung. Die Verfügbarkeit einer solchen Verbindung zu einem bestimmten Zeitpunkt ist dagegen eine dynamische Randbedingung (siehe unten, Nummer 6).

### 3. Kapazitätsbezogene Randbedingungen

Kapazitätsbezogene Randbedingungen beschreiben die Kapazität eines jeweiligen Anlagenteils, nämlich bei einem Container in Form des möglichen Füllvolumens. Solche kapazitätsbezogenen Randbedingungen beeinflussen zum Beispiel die Anzahl der für eine vorgegebene Produktmenge notwendigen Chargen.

### 4. Skalierung und skalierungsspezifische Randbedingungen

Grundsätzlich erfordert jeder Prozessschritt eine gewisse minimal erforderliche Materialmenge und lässt nur eine maximal mögliche Materialmenge zu, und zwar aus chemisch-physikalischen Gründen, im Unterschied zur oben genannten Kapazitätsrandbedingung. So kann eine Reaktion nur in einem bestimmten Mengenbereich der Reaktanden sinnvoll ablaufen. Die Mengen der Eingangsmaterialien eines Prozessschritts werden mit Hilfe einer (im Allgemeinen nichtlinearen) Skalierungsfunktion aus der Menge des herzustellenden Produkts bestimmt. Die Skalierungsfunktion ist rezeptspezifisch und vorgegeben. Sie bildet die gewünschte Menge des Endprodukts in einer gegebenen Charge ab auf die Menge der dafür notwendigen Eingangsmaterialien - im Allgemeinen in Stufen über mehrere Zwischenprodukte hinweg. Sie ist grundsätzlich nichtlinear als Funktion der Menge des Endprodukts, auch wenn es meistens einen linearen Bereich gibt. So werden z.B. für 100 kg eines Reinigungsmittels 50 kg von Eingangsstoff A, 40 kg von Eingangsstoff B und 30 kg von Eingangsstoff C benötigt. Für 30 kg wird dagegen nicht ein Drittel der Eingangsmengen benötigt, sondern z.B. 20 kg von Eingangsstoff A, 15 kg von Eingangsstoff B und 12 kg von Eingangsstoff C, weil die Herstellung bei geringeren Mengen weniger effizient ist. Unterhalb von 10 kg ist gar keine sinnvolle Herstellung mehr möglich, ebenso ist eine gleichbleibende Qualität oberhalb von 1.000 kg nicht mehr möglich.

Diese Grenzen des Herstellbarkeitsbereichs in einer Charge stellen die skalierungsspezifischen Randbedingungen dar. Bezüglich der Einhaltung der minimal erforderlichen Materialmengen ist eine Prüfung mit Hinblick auf die kapazitätsbezogenen Randbedingungen (Nr. 3) erforderlich, d.h. es muss gesichert sein, dass nicht bereits die Eingangsmengen für einen Anlagenteil die Kapazität des zugehörigen Anlagenteils gemäß Randbedingung Nr. 3. überschreiten.

### 5. Materialverfügbarkeit

Im Rahmen des Chargenprozesses notwendige Ausgangsstoffe oder sonstige Materialien stehen gegebenenfalls nicht in ausreichender Menge zur Verfügung. Je nach Chargengröße kann wegen der Nichtlinearität der Skalierungsfunktion ggf. ein etwas anderes Ergebnis beim Abgleich der benötigten Mengen der Eingangsmaterialien gegen die Vorräte entstehen.

### B. Dynamische Randbedingungen

Dynamische Randbedingungen sind für das Scheduling-Problem relevant und betreffen die Nutzung und die Nutzbarkeit eines bestimmten Anlagenteils während einer bestimmten Zeitspanne. Die Auswertung der dynamischen Randbedingungen erfolgt im Anschluss an die Auswertung der statischen Randbedingungen (Nr. 1 bis Nr. 5).

### 6. Verfügbarkeitsbezogene Randbedingungen

Mit solchen Randbedingungen wird berücksichtigt, ob und wann ein Anlagenteil belegt ist und dann entsprechend nicht im Rahmen der Optimierung zur Auswahl zur Verfügung steht. Ein Anlagenteil kann zum Beispiel im Rahmen einer Abarbeitung eines anderen Rezepts belegt sein. Des Weiteren kann ein Anlagenteil auch dann, wenn es aktuell nicht belegt ist, deshalb nicht zur Verfügung stehen, weil es für eine Einhaltung einer speziellen Produktionsreihenfolge reserviert ist. Andererseits kann ein Anlagenteil außer Betrieb sein, zum Beispiel aufgrund von Störungen, Wartungsfällen und dergleichen. Schließlich kann ein Anlagenteil aufgrund von Reinigungsarbeiten oder dergleichen nicht verfügbar sein.

7. Wartezeitbezogene Randbedingungen

Mittels wartezeitbezogener Randbedingungen wird zum Beispiel berücksichtigt, dass ein Zwischenprodukt nur für eine bestimmte Zeit in einem Anlagenteil verbleiben darf, zum Beispiel weil das Zwischenprodukt ansonsten in einem Container aushärtet und einerseits als Zwischenprodukt verloren ist und andererseits eine aufwändige Reinigung des Anlagenteils erforderlich macht. Solche wartezeitbezogenen Randbedingungen sind von dem jeweiligen Material oder den jeweiligen Materialien und dem jeweiligen Anlagenteil abhängig und beeinflussen die Startzeit eines nachfolgenden Teilprozesses. Wartezeitbezogene Randbedingungen werden in Bezug auf die Zeitdifferenz zwischen dem Ende eines vorangehenden Teilprozesses und dem Zeitpunkt für den Beginn eines nachfolgenden Teilprozesses überprüft.

Eine effiziente automatische Berücksichtigung sämtlicher oben genannter Randbedingungen ist nicht bekannt. Bisherige Lösungen beschränken sich darauf, dass ein Anlagenfahrer - im Wesentlichen aufgrund oftmals langjähriger Erfahrung - einzelne Anlagenteile für die Ausführung eines Chargenprozesses auswählt und dabei Randbedingungen gemäß Nr. 1, Nr. 2 und Nr. 3 berücksichtigt. Chargengrößen werden dabei nicht unter Optimierungsgesichtspunkten betrachtet und stattdessen werden oftmals möglichst große Chargen gefahren. Die Vielzahl der grundsätzlichen Möglichkeiten zur Abarbeitung der vorgegebenen Anzahl von Aufträgen überfordert bei komplexen, polyvalenten Anlagen den Anlagenfahrer bei der Identifikation der besten Vorgehensweise. Ein optimaler Anlagenbetrieb (speziell eine bestmögliche Nutzung der Anlagenteile, schnellstmögliche oder kostengünstigste Produktion) ist auf diese Weise nicht gewährleistet. Schwierig ist dabei vor allem die Wahl der Chargengrößen. Ein schlichtes Fahren möglichst großer Chargen führt oftmals entweder zu einer Überproduktion oder zu einer ungünstig kleinen letzten Charge.

Eine Aufgabe der vorliegenden Erfindung besteht folglich darin, eine Lösung für dieses Problem anzugeben, nämlich ein Verfahren zur automatischen Optimierung von Chargenprozessen sowie ein nach dem Verfahren automatisch arbeitendes System.

Diese Aufgabe wird erfindungsgemäß mittels eines Verfahrens mit den Merkmalen des Anspruchs 1 gelöst. Die Aufgabe wird erfindungsgemäß ebenfalls mittels eines Systems mit den Merkmalen des parallelen Vorrichtungsanspruchs gelöst. Bei dem Verfahren ist Folgendes vorgesehen: Es werden vorgegebene oder vorgebbare statische und/oder dynamische Randbedingungen ausgewertet. Auf Basis der Randbedingungen sowie eines vorgegebenen oder vorgebbaren Prozessgraphen wird zumindest ein Anlagenbelegungsgraph generiert, wobei der oder jeder Anlagenbelegungsgraph einzelne Anlagenteile der jeweiligen Anlage referenziert. Auf Basis des oder jedes Anlagenbelegungsgraphen und für den oder jeden Anlagenbelegungsgraphen werden Produktionsmengenbereiche ermittelt. Dann werden zum Erhalt eines Lösungsraums verschiedene Mengen (Kandidatenmengen) gebildet. Eine erste Kandidatenmenge $M_K^{(R)}$ umfasst den oder jeden Anlagenbelegungsgraphen und eine damit verbundene Produktionsmenge oder einen damit verbundenen Produktionsmengenbereich. Eine zweite Kandidatenmenge $C_K^{(R)}$ wird auf Basis der ersten Kandidatenmenge $M_K^{(R)}$ gebildet und umfasst alle zur Abarbeitung des Auftrags zu genau einem Rezept geeigneten Kombinationen von Anlagenbelegungsgraphen aus der ersten Kandidatenmenge $M_K^{(R)}$. Bei einem Auftrag mit einer Mehrzahl von Rezepten ergibt sich entsprechend eine Mehrzahl von zweiten Kandidatenmengen $C_K^{(R)}$, nämlich jeweils eine zweite Kandidatenmenge $C_K^{(R)}$ für jedes Rezept. Bei einem Auftrag mit nur einem Rezept ergibt sich entsprechend nur genau eine zweite Kandidatenmenge $C_K^{(R)}$. Schließlich wird auf Basis der oder jeder zweiten Kandidatenmenge $C_K^{(R)}$ eine dritte Kandidatenmenge $C_K$ als Kombination aller Elemente der oder jeder zweiten Kandidatenmenge $C_K^{(R)}$ gebildet. Diese bildet den eigentlichen Lösungsraum. Auf Basis der oder jeder zweiten Kandidatenmenge $C_K^{(R)}$ werden optimale Chargengrößen für den jeweiligen Auftrag ermittelt und schließlich wird ein Zeitplan zur Abarbeitung des zumindest einen Auftrags mit den ermittelten optimalen Chargengrößen auf den von einem jeweils zugrunde liegenden Anlagenbelegungsgraph referenzierten Anlagenteilen ermittelt. Dabei werden prinzipiell alle Elemente von $C_K$ als Grundlage für jeweils einen Zeitplan herangezogen und mittels einer Bewertungsfunktion das Element von $C_K$ mit dem besten resultierenden Zeitplan bestimmt. Dies beinhaltet insbesondere die Festlegung einer optimalen Chargenanzahl für den oder jeden Auftrag.

Die Begriffe "Optimierung" und "optimal" meinen hier und im Folgenden nicht das exakte, theoretisch mögliche Optimum, sondern vielmehr eine Optimierung gegenüber dem, was bisher mittels einer manuellen Planung durch einen Anlagenfahrer oder einer Planung aufgrund von Erfahrungswissen erreichbar war.

Mittels des Systems, also einem Computersystem mit zumindest einem Computer, ist das hier und im Folgenden beschriebene Verfahren ausführbar und entsprechend umfasst das System ein Mittel oder Mittel, welche zur automatischen Ausführung des Verfahrens und der davon umfassten Verfahrensschritte bestimmt und eingerichtet ist bzw. sind.

Für die weitere Beschreibung gilt zur Vermeidung unnötiger Wiederholungen, dass Merkmale und Details, die im Zusammenhang mit dem genannten Verfahren sowie eventueller Ausgestaltungen beschrieben sind, selbstverständlich auch im Zusammenhang mit und im Hinblick auf ein zur Ausführung des Verfahrens eingerichtetes System und umgekehrt gelten. Dementsprechend kann das Verfahren auch mittels einzelner oder mehrerer Verfahrensmerkmale fortgebildet sein, die sich auf von dem System ausgeführte Verfahrensschritte beziehen, und das System kann entsprechend auch durch Mittel zur Ausführung von im Rahmen des Verfahrens ausgeführten Verfahrensschritten fortgebildet sein. Folglich gelten Merkmale und Details, die im Zusammenhang mit dem genannten Verfahren und eventueller Ausgestaltungen beschrieben sind, selbstverständlich auch im Zusammenhang mit und im Hinblick auf das zur Ausführung des Verfahrens bestimmte System und umgekehrt, so dass bezüglich der Offenbarung zu den einzelnen Aspekten der Erfindung stets wechselseitig Bezug genommen wird bzw. werden kann.

Der Vorteil des hier vorgeschlagenen Ansatzes besteht darin, dass normalerweise deutlich bessere Anlagenbelegungen gefunden werden und kürzere Produktionszeiten resultieren, als dies bei einer Planung durch einen menschlichen Anlagenfahrer zu erwarten ist. Die Aufgabe des Anlagenfahrers ist deutlich vereinfacht und dieser kann sich auf die Überwachung der Produktionsanlage konzentrieren.

Das gegenständliche Verfahren ist zur automatischen Ausführung in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung, in deren Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Ausführungsformen des hier vorgeschlagenen Ansatzes beziehen sich auf Möglichkeiten zur gezielten Reduzierung oder Erhöhung des Umfangs der rezeptspezifischen Kandidatenmenge $M_K^{(R)}$ (erste Kandidatenmenge) für einen Anlagenbelegungsgraphen eines bestimmten Auftrags/Rezepts sowie einer sich daraus ergebenden weiteren Kandidatenmenge $C_K^{(R)}$ (zweite Kandidatenmenge), gegeben als die möglichen Kombinationen von Anlagenbelegungsgraphen aus $M_K^{(R)}$ zur vollständigen Abarbeitung eines Auftrags/Rezepts R, und einer nochmals weiteren Kandidatenmenge $C_K$ (dritte Kandidatenmenge), gegeben als die möglichen Kombinationen von Elementen von $C_K^{(R)}$ zur vollständigen Abarbeitung aller Aufträge/Rezepte.

Eine Reduktion des Umfangs der ersten Kandidatenmenge $M_K^{(R)}$ kann einfach durch Auswahl der m besten (m≥1 konfigurierbar) Anlagenbelegungsgraphen bezüglich einer konfigurierbaren Bewertungsfunktion $F_R$ geschehen. $F_R$ ordnet jedem Graphen aus $M_K^{(R)}$ einen Score zu, der sich z.B. ergibt aus den Kosten für die Benutzung der eingesetzten Maschinen oder der Mengenflexibilität (Breite des Mengen-Intervalls ($V_{min}$, $V_{max}$), für das der Anlagenbelegungsgraph tauglich ist - siehe fünfter Verfahrensschritt).

Eine Reduktion des Umfangs der zweiten Kandidatenmenge $C_K^{(R)}$ kann durch eine Aufhebung der Wahlfreiheit bei der Festlegung von Chargengrößen durch eine Optimierungsvorschrift erfolgen. Dies wird in Schritt VI genauer beschrieben.

Eine Reduktion des Umfangs der Kandidatenmenge $C_K$ kann mittels eines Überlappungskoeffizienten erfolgen, welcher ein Maß für den Umfang einer mehrfachen Benutzung ein und desselben Anlagenteils bei der Abarbeitung der Chargen der verschiedenen Aufträge ausdrückt, so dass bei einem hohen Überlappungskoeffizienten eher davon ausgegangen werden muss, dass die mehrfache Benutzung des betreffenden Anlagenteils zu einem Engpass führen kann bzw. die Vermeidung desselben zu einer sehr langen Abarbeitungsdauer. Eine solche Reduktion des Umfangs der Kandidatenmenge $C_K$ ist im Sinne einer Reduktion der Bearbeitungszeit bei der Auswertung der Kandidatenmenge $C_K$ sinnvoll.

Allerdings kann es auch sinnvoll sein, Reduzierungen der Kandidatenmengen $M_K$, $C_K^{(R)}$ und $C_K$ teilweise wieder rückgängig zu machen, wenn sich mit den reduzierten Kandidatenmengen keine gute Lösung des Gesamtproblems finden lässt. Dies ist zum Beispiel dann der Fall, wenn mittels des Schedulers ein ungünstiger Zeitplan, insbesondere ein Zeitplan, der einen zu schwachen Score bezüglich einer vorgegebenen oder vorgebbaren Zielfunktion erzielt, erstellt wurde. Dann kann mit einiger Wahrscheinlichkeit davon ausgegangen werden, dass eine Lösungsmöglichkeit, die zu einem günstigeren Zeitplan geführt hätte, im Rahmen der Begrenzungen von $M_K^{(R)}$, $C_K^{(R)}$ und $C_K$ (wie oben beschrieben) ausgeschieden wurde. Man kann dann etwa zur Erhöhung des Umfangs der Kandidatenmenge $C_K$ bzw. $C_K^{(R)}$ den Schwellwert für einen noch akzeptablen Überlappungskoeffizienten bzw. die maximale Chargenanzahl heraufsetzen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1 eine Produktionsanlage für einen oder mehrere Chargenprozesse,

FIG 2 bis

FIG 5 Graphen zur Modellierung der Anforderungen bei der Abarbeitung eines vorgegebenen Rezepts auf einer jeweiligen Produktionsanlage,

FIG 6 eine Abfolge der im Folgenden erläuterten Verfahrensschritte gemäß dem hier vorgeschlagenen Ansatz sowie ein eine Implementation der Verfahrensschritte umfassendes Computerprogramm,

FIG 7 eine Übersichtsdarstellung des hier vorgeschlagenen Ansatzes und

FIG 8 einen als Ergebnis des Optimierungsverfahrens resultierenden Zeitplan.

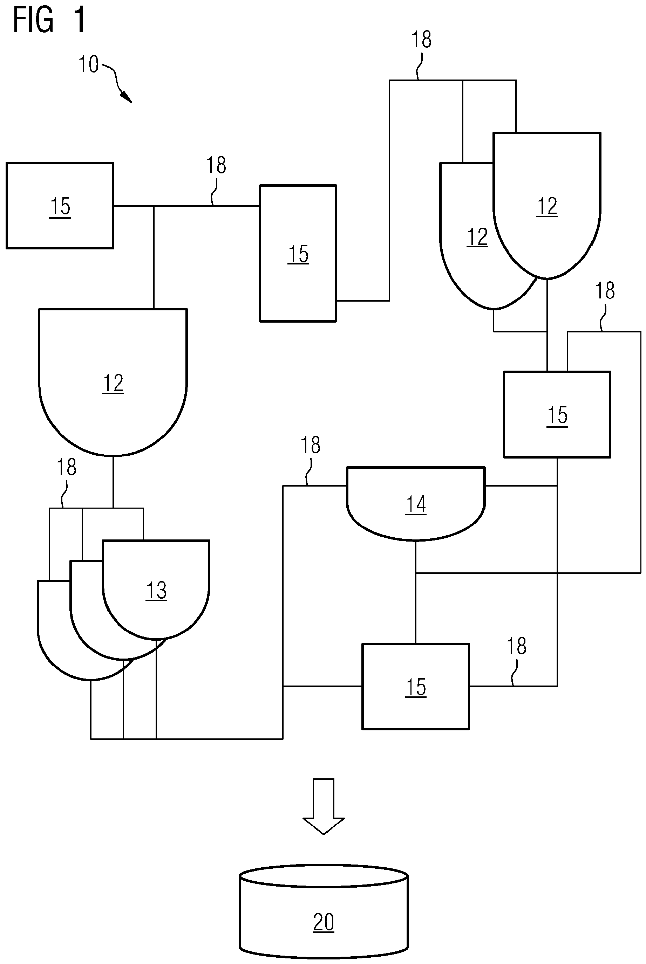

Die Darstellung in FIG 1 zeigt schematisch vereinfacht und ausdrücklich nur exemplarisch eine technische Anlage 10 zur Ausführung zumindest eines Chargenprozesses. Die Anlage 10 umfasst unterschiedliche Anlagenteile 12, 13, 14, 15, zum Beispiel in Form eines Containers 12, Reaktors 13 oder Rührbehälters 14 und/oder Anlagenteile 15 zum Kühlen und/oder zum Heizen, sowie Verbindungen 18 in Form von Rohrleitungen, Förderbändern oder dergleichen. Die Verbindungen 18 bestehen zwischen jeweils zumindest zwei Anlagenteilen 12-15. Ein Chargenprozess, vorliegend die Abarbeitung eines Rezepts, kann unterschiedliche Anlagenteile 12-15 involvieren, wobei der Begriff Anlagenteil hier und im Folgenden im Sinne der vorangehenden Beispiele verstanden wird und allgemein ein Anlagenteil im Sinne der ISA88 bezeichnet, und zwar auf allen dort definierten Hierarchieebenen. Eine Datenbasis 20 umfasst ein Modell der Anlage 10 mit einer Beschreibung der davon umfassten Anlagenteile 12-15 sowie der zwischen den Anlagenteilen 12-15 bestehenden Verbindungen 18.

Die eingangs formulierte Optimierungsaufgabe bezieht sich bei einer insbesondere gleichzeitigen Ausführung mehrerer Chargen auf eine optimale Auswahl der jeweils notwendigen Anlagenteile 12-15, wobei die Auswahlmöglichkeiten durch die Randbedingungen gemäß Nr. 1 bis Nr. 4 beschränkt sind. Als gleichzeitige Ausführung mehrerer Chargen wird eine gleichzeitige Ausführung von Chargen mehrerer unterschiedlicher Rezepte, eine gleichzeitige Ausführung von Chargen ein und desselben Rezepts oder Mischformen (mehrere unterschiedliche Rezepte und mehrere Chargen zu gleichen Rezepten) bezeichnet. Gleichzeitig meint dabei nicht notwendig einen gemeinsamen Start- und Endzeitpunkt, sondern eine zumindest abschnittsweise zeitliche Parallelität während der Ausführung während des zu Beginn des Verfahrens definierten Dispositionszeitraums.

Das abzuarbeitende Rezept ergibt sich aufgrund zumindest eines für die Anlage 10 vorliegenden Auftrags. Jeder Auftrag umfasst genau ein abzuarbeitendes Rezept. Das Rezept wird als Chargenprozess in Form einer bestimmten Anzahl aufeinander folgender Chargen abgearbeitet. Der jeweilige Auftrag definiert eine jeweils gewünschte Zielmenge $V_Z$ eines als Ergebnis des Chargenprozesses resultierenden Produkts (die Zielmenge $V_Z$ muss sich als die Summe der Chargenmengen $V_{Charge}$ ergeben). Eine größere Zielmenge $V_Z$ führt üblicherweise zu einer erhöhten Chargenanzahl. Gleichwohl hängt die Anzahl der zur Produktion der Zielmenge $V_Z$ notwendigen Chargen zum Beispiel auch von den Kapazitäten der im Rahmen der Produktion verwendeten Anlagenteile 12-15 ab.

Der Ablauf des hier vorgeschlagenen Verfahrens für eine solche Optimierung gliedert sich grob in mehrere Verfahrensschritte, die nachfolgend in einer möglichen und sinnvollen Reihenfolge erläutert werden. Dennoch ist die hier beschriebene Reihenfolge nicht in jedem Fall zwingend und die Reihenfolge einzelner Verfahrensschritte ist grundsätzlich veränderbar. Grundsätzlich gilt, dass vor einem bestimmten Verfahrensschritt der oder jeder vorangehende Verfahrensschritt ausgeführt sein muss, der Ergebnisse liefert, die für die Ausführung des jeweiligen Verfahrensschritts notwendig sind und gewissermaßen als Eingang oder Eingänge für diesen Verfahrensschritt fungieren.

I. Erster Verfahrensschritt

In einem ersten Verfahrensschritt konfiguriert der Benutzer über eine dafür vorgesehene Benutzerschnittstelle die konkreten Randbedingungen der Anlage 10 (Anlagenteile 12-15, deren Fähigkeiten zur Ausführung von Prozessschritten von Rezepten, Verbindungen 18 zwischen den Anlagenteilen 12-15, Kapazitäten und Skalierungsfunktionen/Skalierungslimits) und definiert und/oder ergänzt dabei ein im Rahmen des Verfahrens verwendetes Modell (Datenbasis 20) der jeweiligen Produktionsanlage 10, welches die zu der Produktionsanlage 10 gehörigen Anlagenteile 12-15 und zwischen diesen bestehende oder mögliche Verbindungen 18 (Materialflussverbindungen) berücksichtigt.

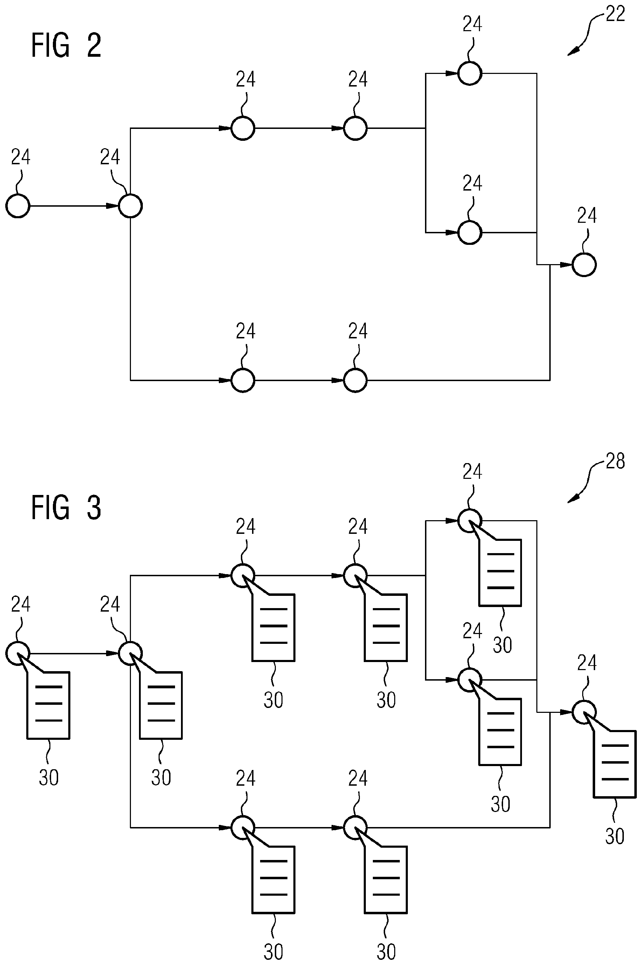

Des Weiteren spezifiziert der Benutzer für jedes auf der Anlage 10 ausführbare Rezept in Form eines Graphen die Prozessschritte (noch ohne Zuweisung konkreter Anlagenteile 12-15), die für die Ausführung des durch das jeweilige Rezept definierten Chargenprozesses notwendig sind. Der resultierende Graph ist ein rezeptspezifischer Prozessgraph 22 und ein solcher ist in FIG 2 gezeigt.

Der Prozessgraph 22 umfasst in grundsätzlich an sich bekannter Art und Weise eine Mehrzahl von über sogenannte (gerichtete) Kanten miteinander verbundenen Knoten 24. Jeder Knoten 24 repräsentiert einen im Rahmen der Abarbeitung einer einzelnen Charge eines jeweiligen Rezepts notwendigen Prozessschritt, die Kanten repräsentieren die Materialflüsse zwischen ihnen. Die Reihenfolge der Knoten 24 entsprechend der Pfeilrichtung an den sie verbindenden Kanten entspricht der Prozessreihenfolge während der Abarbeitung der Charge oder der Chargen. Die Reihenfolge der Knoten 24 beschreibt also, in welcher Reihenfolge jeweils ein Anlagenteil 12-15 einer jeweiligen Anlagenklasse, also zum Beispiel Container 12, Reaktor 13, Rührer 14 etc., im Rahmen der Abarbeitung einer Charge benötigt wird (Belegungsreihenfolge). Dabei sind parallele Zweige des Prozessgraphen 22 so zu verstehen, dass sie unabhängig voneinander abgearbeitet werden können. Die Zusammenführung von Kanten in einem Knoten 24 bedeutet, dass hier mehrere eingehende Materialflüsse vereinigt werden und folglich alle sie produzierenden Vorgängerprozessschritte abgeschlossen sein müssen.

II. Zweiter Verfahrensschritt

In einem zweiten Verfahrensschritt konfiguriert der Benutzer - ebenfalls mittels einer dafür vorgesehenen Benutzerschnittstelle - jeweils eine Zielfunktion für eine optimale Chargengröße und zur Bewertung eines Zeitplans, welcher später von einem Scheduler zur Abarbeitung des oder jedes Auftrags erstellt wird. Ebenso konfiguriert er die Maximalzahl der zu betrachtenden Chargen pro Auftrag sowie den noch akzeptablen Wert des weiter unten (VII.) beschriebenen ÜberlappungsKoeffizienten.

III. Dritter Verfahrensschritt

In einem dritten Verfahrensschritt werden automatisch auf Basis des oder jedes Prozessgraphen 22 aus dem ersten Verfahrensschritt (mehrere Prozessgraphen 22 bei mehreren Rezepten) eine Mehrzahl von Anlagenbelegungsgraphen 26 (FIG 5) erzeugt. Jeder Prozessgraph 22 umfasst in abstrakter Form als Knoten 24 des Graphen 22 eine Spezifikation der für die Abarbeitung des jeweiligen Rezepts notwendigen Anlagenteile 12-15 (das Anlagenteil 12-15 kann auch in Form einer Anlagenteilklasse, zum Beispiel "Reaktionsbehälter vom Typ A", spezifiziert werden). Diese werden im Folgenden als abstrakte Anlagenteile bezeichnet. In den jetzt automatisch erzeugten Anlagenbelegungsgraphen 26 tritt dort in Form eines Knotens 24 an die Stelle eines abstrakten Anlagenteils jeweils genau ein konkretes Anlagenteil 12-15, genauer gesagt die Referenzierung genau eines konkreten Anlagenteils 12-15. Im Folgenden wird im Interesse einer besseren Lesbarkeit der weiteren Beschreibung immer kurz von einem Anlagenteil 12-15 gesprochen, auch wenn nur eine Spezifikation oder eine Referenzierung eines Anlagenteils 12-15 gemeint ist.

Zur Erzeugung der Anlagenbelegungsgraphen 26 wird für jedes einzelne Rezept ein zunächst noch im Wesentlichen leerer Graph 28 erzeugt. Jeder Anlagenbelegungsgraph 26 entsteht auf Basis des Prozessgraphen 22 des jeweiligen Rezepts und jeder Anlagenbelegungsgraph 26 erbt von dem zugrunde liegenden Prozessgraph 22 dessen Struktur, also die Anzahl der Knoten 24 sowie die die einzelnen Knoten 24 verbindenden Kanten (der Prozessgraph 22 ist die Vorlage / das Template für den Anlagenbelegungsgraph 26).

An den Knoten 24 des auf Basis des Prozessgraphen 22 erzeugten Graphen 28 (FIG 3) wird für jedes von dem zugrunde liegenden Prozessgraphen 22 umfasste abstrakte Anlagenteil eine Liste 30 (FIG 3) mit denjenigen Anlagenteilen 12-15 erstellt, die als konkrete Anlagenteile 12-15 in Betracht kommen. Das Erstellen einer jeden solchen Liste 30 erfolgt automatisch unter Berücksichtigung der vom Benutzer im ersten Verfahrensschritt konfigurierten Angaben darüber, welche Anlagenteile 12-15 welche Prozessschritte ausführen können. Damit wird die Randbedingung gemäß Nr. 1 berücksichtigt.

Anlagenteile 12-15, deren Kapazität (Randbedingungen gemäß Nr. 3) gemäß der Skalierung und der skalierungsspezifischen Randbedingungen (Randbedingungen gemäß Nr. 4) für eine Verwendung bei der Abarbeitung des jeweiligen Rezepts nicht ausreicht, werden nicht berücksichtigt.

Beim Stadium der Planung zum Ende der Erstellung dieser Listen 30 können die resultierenden Listen 30 des Graphen 28 ein und dasselbe Anlagenteil 12-15 auch mehrfach umfassen. Der resultierende Graph 28 mit den mit jedem Knoten 24 verbundenen Listen 30 ist in der Darstellung in FIG 3 gezeigt. Einzelne jeweils ein Anlagenteil 12-15 referenzierende Einträge in diesen Listen 30 sind jeweils durch eine horizontale Linie dargestellt. Die Anzahl der Einträge in den einzelnen Listen 30 kann unterschiedlich sein. Jede Liste 30 umfasst zumindest einen Eintrag. Im Falle einer leeren Liste 30 für zumindest einen Knoten 24 kann das dem Prozessgraph 22 zugrunde liegende Rezept auf der jeweiligen Anlage 10 nicht abgearbeitet werden.

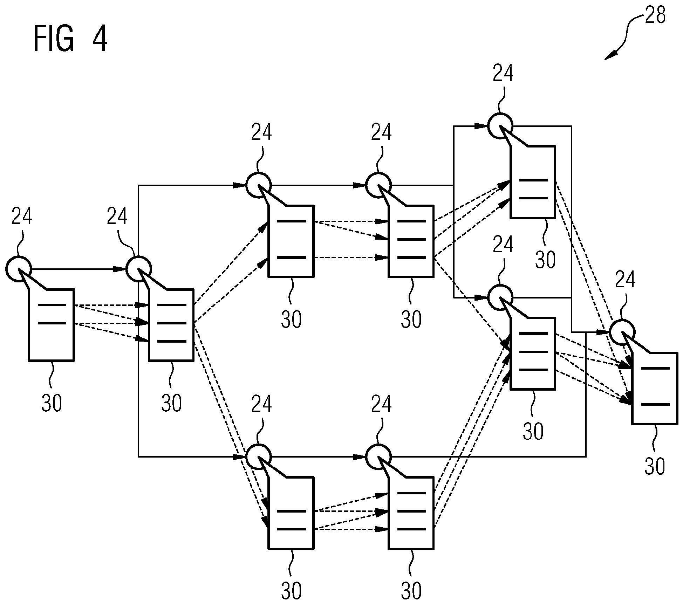

Nach der Erstellung der Listen 30 wird der Inhalt der Listen 30 reduziert. Dabei werden entlang jedes bis jetzt erzeugten Graphen 28 alle Knoten 24 besucht. Bei der weiteren Erläuterung wird nachfolgend vereinfachend im Folgenden mitunter nur von einem Knoten 24 gesprochen, auch wenn tatsächlich die mit diesem Knoten 24 verbundene Liste 30 und/oder die dort eingetragenen Anlagenteile 12-15 gemeint ist bzw. sind. Für jeden Knoten 24 wird für die in dessen Liste 30 eingetragenen Anlagenteile 12-15 anhand der transferspezifischen Randbedingungen (Randbedingungen gemäß Nr. 2) geprüft, ob zumindest eine Verbindung 18 von diesem Anlagenteil 12-15 zu einem Anlagenteil 12-15 eines entlang des Graphen 28 unmittelbar nachfolgenden Knotens 24 besteht. Im Falle einer solchen (möglichen) Verbindung 18 bleibt das Anlagenteil 12-15 in der Liste 30 enthalten. Ansonsten wird es aus der Liste 30 gelöscht. Ab dem zweiten Knoten 24 (mehrere erste (initiale) Knoten 24 sind möglich) des Graphen 28 wird für die von dessen Liste 30 umfassten Anlagenteile 12-15 anhand der transferspezifischen Randbedingungen (Randbedingungen gemäß Nr. 2) zusätzlich auch geprüft, ob eine Verbindung 18 zu einem Anlagenteil 12-15 des unmittelbar vorangehenden Knotens 24 besteht. Auch hier bleibt im Falle einer (möglichen) Verbindung 18 das Anlagenteil 12-15 in der Liste 30 enthalten. Ansonsten wird es aus der Liste 30 gelöscht. Im Zuge dieser "Ausdünnung" der Inhalte der Listen 30, wenn also geprüft wird, ob zwischen den einzelnen in den Listen 30 referenzierten Anlagenteilen 12-15 eine einen Materialfluss erlaubende Verbindung 18 besteht, werden diese Verbindungen 18 als Kanten in den bisher entstandenen Graph 28 eingetragen (FIG 4), und zwar nicht zwischen den bisherigen Knoten 24, sondern zwischen den einzelnen Listenelementen, die damit als Knoten 24 eines resultierenden Graphen 26 fungieren. Dieser resultierende Graph 26 ist der auf Basis des Prozessgraphen 22 entstandene Anlagenbelegungsgraph 26.

Bei der Prozedur werden, wo möglich, zur Beschleunigung des Ablaufs Äquivalenzklassen von Anlagenteilen 12-15 gebildet, die mit genau denselben Vorgängern und Nachfolgern verbunden sind. Diese Anlagenteile 12-15 sind natürlich gemäß Konstruktion alle zur Ausführung des in Frage stehenden Prozessschritts geeignet, müssen aber nicht vollkommen identisch sein, sie können zum Beispiel in ihrer Kapazität differieren. Zunächst werden Anlagenbelegungsgraphen 26 auf der Basis solcher Äquivalenzklassen erzeugt. Dies geschieht zur effektiveren Behandlung der Vielfalt der zu untersuchenden Möglichkeiten. Als Ergebnis erhält man effiziente Zusammenfassungen der auf Basis der Randbedingungen gemäß Nr. 1 und Nr. 2 möglichen konkreten Anlagenbelegungen.

Ein möglicher Anlagenbelegungsgraph 26 ist in der Darstellung in FIG 5 gezeigt. Die jeweils ein Anlagenteil 12-15 repräsentierenden Listenelemente (FIG 4) bilden die Knoten 24 des Graphen 26 und sind in der Darstellung in FIG 5 symbolisch mit "Unit A1", "Unit A2" usw. bezeichnet. Die in Form dünner Linien zwischen den Knoten 24 gezeigten Kanten stellen die grundsätzlich möglichen Materialflusswege zwischen den einzelnen Anlagenteilen 12-15 dar und bilden Kanten in weiteren, nicht gezeigten Anlagenbelegungsgraphen 26. Ein weiterer Anlagenbelegungsgraph 26 umfasst also zum Beispiel die Anlagenteile 12-15 mit den Bezeichnungen "Unit A1", "Unit B2", "Unit C2", "Unit E1" und "Unit F1". Ein nochmals weiterer Anlagenbelegungsgraph 26 umfasst entsprechend zum Beispiel die Anlagenteile 12-15 mit den Bezeichnungen "Unit A2", "Unit B2", "Unit C2", "Unit D2" sowie "Unit F2" und so weiter.

Die bei dem in FIG 5 gezeigten Anlagenbelegungsgraph 26 in Produktionsrichtung "parallelen" Anlagenteile 12-15 mit den Bezeichnungen "Unit D1" und "Unit E1" stellen eine Situation dar, bei der das vorangehende Anlagenteil 12-15 ("Unit C1") mit verschiedenen Materialströmen in Richtung auf zwei nachfolgende Anlagenteile 12-15 ("Unit D1", "Unit E1") entleert und deren Ausgabe anschließend in einem Anlagenteil 12-15 ("Unit F1") zusammengeführt wird.

Als Ergebnis dieses Verfahrensschritts ergibt sich eine Vielzahl von Anlagenbelegungsgraphen 26, die im Folgenden symbolisch als $G_1$, $G_2$ ... $G_i$ bezeichnet werden. Alle Anlagenbelegungsgraphen 26 für ein gegebenes Rezept bilden zusammen die Menge (erste Kandidatenmenge) der Anlagenbelegungsgraphen 26: $M_K^{(R)} = [G_1(R), G_2(R), G_3(R) ... G_i(R)]$. An dieser Stelle sei in Erinnerung gerufen, dass ein Anlagenbelegungsgraph 26 immer zu genau einem sich aufgrund eines Auftrags für die Produktionsanlage 10 ergebenden Rezept gehört. Eine Mehrzahl von Rezepten kann symbolisch als R1, R2 usw. geschrieben werden. Ein zu einem bestimmten Rezept gehöriger Anlagenbelegungsgraph 26 kann entsprechend symbolisch als $G_i(R_r)$ geschrieben werden. Tatsächlich ist die Anzahl der möglichen Anlagenbelegungsgraphen 26 für unterschiedliche Rezepte üblicherweise unterschiedlich.

IV. Vierter Verfahrensschritt

In einem vierten Verfahrensschritt wird automatisch mittels einer Schnittstelle zu einem ERP-System oder von der in den beiden vorangegangenen Verfahrensschritten erwähnten Benutzerschnittstelle eine Liste mit Aufträgen eingelesen, die mit einer jeweiligen Priorität versehen sind und die innerhalb einer vorgegebenen oder vorgebbaren Zeitspanne zu erledigen sind. Die Liste dieser Aufträge ist Gegenstand der Optimierung in diesem Verfahren.

V. Fünfter Verfahrensschritt

In einem fünften Verfahrensschritt erfolgt eine Ermittlung von Produktionsmengenbereichen für die Graphen $G_i(R)$ (= Anlagenbelegungsgraphen 26). Mit einer Anlagenbelegung gemäß jedem Graph $G_i(R)$ aus der ersten Kandidatenmenge $M_K^{(R)}$ ist jeweils eine minimale Produktionsmenge und eine maximal mögliche Produktionsmenge verbunden, also ein durch solche Unter- und Obergrenzen definierter Produktionsmengenbereich.

Die konkreten Werte für solche Unter- und Obergrenzen ergeben sich aufgrund der zuvor definierten Randbedingungen, nämlich die jeweilige Untergrenze aufgrund der Spezifikationen der Skalierung und der skalierungsspezifischen Randbedingungen (siehe oben, Nr. 4) und die Obergrenze folgt aus einer Kombination der kapazitätsbezogenen Randbedingungen (siehe oben, Nr. 3) sowie der Skalierung und der skalierungsspezifischen Randbedingungen (siehe oben, Nr. 4).

Zur Ermittlung der unteren und oberen Grenzwerte wird entlang jedes Anlagenbelegungsgraphen 26 aus der ersten Kandidatenmenge $M_K^{(R)}$ mit dem/den dortigen ersten Knoten 24 begonnen. Die Grenzwerte für das durch diese(n) Knoten 24 repräsentierte Anlagenteil 12-15 ergeben sich aufgrund der Randbedingungen gemäß Nr. 4 (unterer Grenzwert) bzw. Nr. 3 in Verbindung mit Nr. 4 (oberer Grenzwert). Die resultierenden unteren und oberen Grenzwerte fungieren als Eingangswerte für den/die entlang des jeweiligen Anlagenbelegungsgraphen 26 unmittelbar nachfolgende(n) Knoten 24. Damit können auch für diese(n) Knoten 24 untere und obere Grenzwerte ermittelt werden, welche als Eingang eines unmittelbar nachfolgenden Knotens 24 fungieren usw. Die am Ende des Anlagenbelegungsgraphen 26 resultierenden unteren und oberen Grenzwerte sind die den jeweiligen Anlagenbelegungsgraph 26 charakterisierenden Grenzwerte. Wenn sich dabei Anlagenbelegungsgraphen 26 ergeben, bei denen zumindest ein oberer Grenzwert kleiner als der untere Grenzwert ist, wird der gesamte betroffene Anlagenbelegungsgraph 26 gelöscht. Den verbleibenden Anlagenbelegungsgraphen 26 werden die ermittelten Grenzwerte ($V_{min}$, $V_{max}$) in Form eines Attributs hinzugefügt. Dann ergeben sich zusätzliche Informationen für die von der ersten Kandidatenmenge $M_K^{(R)}$ umfassten Anlagenbelegungsgraphen 26: $M_K^{(R)} = [G_1^{[Vmin1, Vmax1]}(R), G_2^{[Vmin2, Vmax2]}(R) ... G_i^{[Vmini, Vmaxi]}(R)]$.

Das Ergebnis dieses Verfahrensschritts sind Produktionsmengenbereiche ($V_{min}$, $V_{max}$) für jeden einzelnen Anlagenbelegungsgraph 26 und damit für jedes Element der ersten Kandidatenmenge $M_K^{(R)}$ für jedes Rezept R. Das Ergebnis kann so interpretiert werden, dass jetzt in einer automatisch verarbeitbaren Form feststeht, dass mit einer Anlagenbelegung gemäß einem bestimmten Anlagenbelegungsgraph 26 von einer jeweils gewünschten Zielmenge $V_z$ minimal die Menge $V_{min}$ und maximal die Menge $V_{max}$ produziert werden kann. Eine solche Produktion entspricht einer Charge. Damit sind jetzt die minimalen und maximalen Produktionsmengen während genau einer Charge für die von der ersten Kandidatenmenge $M_K^{(R)}$ umfassten unterschiedlichen Anlagenbelegungsmöglichkeiten bekannt.

In dem Verfahren wird a priori für jeden Prozessschritt eines Anlagenbelegungsgraphen 26 eine Realisierung durch genau ein Anlagenteil 12-15 angenommen. Ist es prozesstechnisch möglich und sinnvoll, Anlagenteile 12-15 für denselben Prozessschritt derselben Charge zu kombinieren, so kann dies optional zusätzlich automatisch wie folgt berücksichtigt werden:

Anlagenteile 12-15 können immer nur innerhalb einer der oben beschriebenen Äquivalenzklassen kombiniert werden. Der Anlagenfahrer kann durch entsprechende Konfigurationseinstellungen eine Teilmenge einer Äquivalenzklasse (maximal die gesamte Äquivalenzklasse) zur Kombination "freigeben", wobei durch Priorisierungsgewichte festgelegt wird, welche der freigegebenen Anlagenteile 12-15 tatsächlich zum Einsatz kommen sollen in Abhängigkeit von der zu produzierenden Menge. Durch Anwendung der Skalierungsrelationen gemäß Nr. 4. auf die kombinierbaren Anlagenteile 12-15 wird automatisch eine neue Volumenobergrenze $V'_{max}$ für die Kombination der Anlagenteile 12-15 bestimmt und bei der Berechnung der maximalen Produktionsmenge des Anlagenbelegungsgraphen 26 mit den kombinierten Anlagenteilen 12-15 verwendet. Dies gilt potentiell für jede Äquivalenzklasse innerhalb des betrachteten Anlagenbelegungsgraphen 26. Gemäß der konfigurierten Priorisierungsgewichte werden nun sukzessive (startend vom Anlagenteil 12-15 mit dem geringsten Priorisierungsgewicht) alle Anlagenteile 12-15 wieder automatisch aus den Kombinationen eliminiert, die für den Gesamt-Anlagenbelegungsgraphen keine weitere Erhöhung von $V_{max}$ mehr bewirken, weil andere Prozessschritte mit ihren Anlagenteilen 12-15 limitierend wirken. Die so erhaltenen zusätzlichen Anlagenbelegungsgraphen 26 stehen nun für die folgenden Verfahrensschritte ebenfalls zur Verfügung.

VI. Sechster Verfahrensschritt

In einem sechsten Verfahrensschritt wird aufgrund der zu den einzelnen Anlagenbelegungsgraphen 26 (also den Elementen der ersten Kandidatenmenge $M_K^{(R)}$) bis hierher vorliegenden Daten sowie aufgrund eines durch einen jeweiligen Auftrag vorgegebenen Zielvolumens $V_Z$ (der zu produzierenden Menge) ermittelt, mittels welcher Chargen der Auftrag abgearbeitet werden kann. Der Ausdruck "welcher Chargen" meint dabei, dass automatisch einerseits eine Chargenanzahl und andererseits die Anlagenbelegungsgraphen 26 zur Produktion dieser Chargen ermittelt werden.

Bei einer einfachen Anlage 10 mit genau einer möglichen Anlagenbelegung für jeden Auftrag ergibt sich für jeden Auftrag genau ein Anlagenbelegungsgraph 26 ($M_K^{(R)} = G^{[Vmin, Vmax]}(R)$). Davon wird im Folgenden im Sinne einfacher Verhältnisse, aber lediglich zur Veranschaulichung ausgegangen. Bei einer Implementation des hier vorgeschlagenen Ansatzes wird stets die sich für die jeweilige Anlage 10 und den oder jeden Auftrag ergebende und unter Umständen sehr umfangreiche erste Kandidatenmenge $M_K^{(R)}$ betrachtet. Weiter wird - nur zur Veranschaulichung - angenommen, dass für die mit dem o.a. Anlagenbelegungsgraph 26 verbundenen Grenzwerte ($V_{min}$, $V_{max}$) die folgenden Zahlenwerte für einen bestimmten Auftrag ermittelt wurden: $V_{min}$ = 300 kg; $V_{max}$ = 1.000 kg. Die zu produzierende Zielmenge $V_Z$ sei 3.200 kg (die Einheiten "kg" sind lediglich beispielhaft zu verstehen; genauso kann es sich um Zahlenwerte mit der Einheit Liter l, Tonnen t usw. handeln). Mit den gegebenen Grenzwerten ist klar, dass mit einer Charge maximal 1.000 kg der gewünschten Zielmenge $V_Z$ produziert werden können. Es ist also mehr als eine Charge erforderlich, um die gesamte Zielmenge $V_Z$ zu produzieren. Mit einer zweiten Charge können zum Beispiel weitere 1.000 kg, mit einer dritten Charge 900 kg und mit einer abschließenden vierten Charge 300 kg produziert werden. Die Summe der Produktionsmengen aller Chargen ergibt die geforderte Zielmenge (1.000 kg + 1.000 kg + 900 kg + 300 kg = 3.200 kg = $V_Z$). Genauso wäre möglich gewesen, eine erste, zweite, dritte und vierte Charge mit Produktionsmengen von 1.000 kg, 900 kg, 1.000 kg bzw. 300 kg oder 900 kg, 1.000 kg, 1.000 kg bzw. 300 kg vorzusehen. Anhand dieses Beispiels ist ersichtlich, dass es eine Vielzahl möglicher Zusammenstellungen der Produktionsmengen einzelner Chargen gibt, die jeweils zu der gemäß dem Auftrag gewünschten Zielmenge $V_Z$ führen. Symbolisch können die Produktionsmengen einer einzelnen Charge als a, b, c usw. geschrieben werden (a ist die Produktionsmenge der ersten Charge, b diejenige der zweiten Charge usw.) und es gilt jeweils, dass die Summe der einzelnen Produktionsmengen die Zielmenge $V_Z$ ergibt: $\sum$ (a, b ...) = $V_Z$.

Zur Ermittlung der Möglichkeiten zur Zusammenstellung von Chargen wird mit einer vorgegebenen minimalen Chargenanzahl n (zum Beispiel n=1) begonnen und ermittelt, ob mit der entsprechenden Chargenanzahl eine Produktion der gewünschten Zielmenge $V_Z$ des Auftrags möglich ist. Dies geschieht durch Prüfung der ($V_{min}$, $V_{max}$)-Bereiche aller für den jeweiligen Auftrag in Frage kommenden Anlagenbelegungsgraphen 26 aus $M_K^{(R)}$. Vorliegend ist mit genau einer Charge (n=1) die Zielmenge $V_Z$ nicht erreichbar. Dann wird der Ausgangswert erhöht (n→n+1) und erneut geprüft, ob mit der resultierenden Chargenanzahl eine Produktion der gewünschten Zielmenge $V_Z$ möglich ist. Vorliegend ist dies immer noch nicht der Fall, denn mit genau zwei Chargen lassen sich maximal 2.000 kg produzieren. Entsprechend wird die Chargenanzahl erneut inkrementiert (n→n+1) und erneut geprüft, ob eine Produktion der gewünschten Zielmenge $V_Z$ möglich ist. Auch mit drei Chargen lässt sich die gewünschte Zielmenge $V_Z$ noch nicht produzieren. Entsprechend wird die mögliche Chargenanzahl erneut inkrementiert (n→n+1) und wiederum geprüft, ob eine Produktion der gewünschten Zielmenge $V_Z$ möglich ist. Mit vier Chargen lässt sich - wie oben gezeigt - die gewünschte Zielmenge $V_Z$ produzieren und es ergibt sich - wie oben gezeigt - eine Vielzahl möglicher Kombinationen von Produktionsmengen, nämlich eine erste Kombination $\sum$ ($a_1$, $b_1$, $c_1$, $d_1$) = $V_Z$, eine zweite Kombination $\sum$ ($a_2$, $b_2$, $c_2$, $d_2$) = $V_Z$ usw. hin zu einer letzten Kombination $\sum$ ($a_k$, $b_k$, $c_k$, $d_k$) = $V_Z$ ($k \in [N]$). Die $a_1$, $b_1$, $c_1$, $d_1$ bis $a_k$, $b_k$, $c_k$, $d_k$ sind alle möglichen Chargenvolumina, die zu der gewünschten Zielmenge $V_Z$ führen. Es ist möglich, die Anzahl der Chargen über die minimal notwendige Anzahl hinaus zu untersuchen. Im Allgemeinen lautet die Aufgabe, das vorgegebene Produktionsvolumen eines Auftrags zu erfüllen durch eine Summe von Chargenvolumina, von denen jedes im erlaubten ($V_{min}$, $V_{max}$)-Bereich eines zulässigen Anlagenbelegungsgraphen 26 liegt. Diese Aufgabe kann durch einfaches Abprüfen folgender Bedingungen für jeden Kandidaten, also jede Zusammenstellung von Anlagenbelegungsgraphen 26 zur Abarbeitung der herzustellenden Produktionsmenge $V_Z$ eines Rezepts in Chargen sofort gelöst werden:

1. Die Summe aller $V_{min}$ aus den ($V_{min}$, $V_{max}$)-Bereichen der Anlagenbelegungsgraphen 26 für die Chargen darf nicht grösser sein als $V_Z$.
2. Die Summe aller $V_{max}$ aus den ($V_{min}$, $V_{max}$)-Bereichen der Anlagenbelegungsgraphen 26 für die Chargen darf nicht kleiner sein als $V_Z$.

Sind beide Bedingungen erfüllt, so ist es in jedem Fall möglich, das Zielvolumen $V_Z$ mit den vorliegenden Anlagenbelegungsgraphen 26 zu produzieren. Ist auch nur eine der Bedingungen nicht erfüllt, muss die Zusammenstellung der Anlagenbelegungsgraphen 26 verworfen und mit der Prüfung einer anderen Zusammenstellung fortgefahren werden. Dies gilt ganz allgemein, nicht nur für den illustrativen Spezialfall eines einzigen Anlagenbelegungsgraphen 26 pro Rezept. In diesem Spezialfall ist natürlich die einzige Variable die Chargenanzahl n.

Es geht in diesem Schritt noch nicht darum, alle erlaubten Chargenvolumina explizit zu bestimmen, sondern nur darum, Kombinationen von Graphen aus den $M_K^{(R)}$ mit minimaler bzw. etwas höherer Chargenzahl bis zu einem vorgegebenem Limit (z.B. n=6) zu bestimmen. Diese Kombinationen sind Elemente einer zweiten Kandidatenmenge

$C_K^{(R)}$, definiert als Menge aller zur Abarbeitung des Auftrags zum Rezept R geeigneten Kombinationen von Anlagenbelegungsgraphen 26 aus der ersten Kandidatenmenge $M_K^{(R)}$. Die maximal zugelassene Chargenzahl korreliert mit der Berechnungsdauer für das vorliegende Verfahren. Wegen der Skalierungsrelationen gemäß Nr. 4 und der Untergrenze für die produzierbaren Volumina kann aber in keinem Fall die Zahl der Chargen beliebig groß werden.

Die grundsätzlich kontinuierliche Vielfalt an möglichen Chargenvolumina führt nachfolgend allerdings zur Notwendigkeit, diese entweder durch Diskretisierung der möglichen Volumina zu limitieren oder durch eine Optimierungsbedingung. Die letztere Möglichkeit wird im vorliegenden Verfahren gewählt und im siebten Verfahrensschritt beschrieben.

Das Ergebnis bis hierhin kann symbolisch wie folgt geschrieben werden (nun für den allgemeineren Fall mit nicht notwendig nur einem möglichen Anlagenbelegungsgraphen 26) n=4: $(G_1^{(1)}, G_2^{(1)}, G_3^{(1)}, G_4^{(1)})$ ... $(G_{1(k4)}, G_{2(k4)}, G_{3(k4)}, G_{4(k4)})$ n=5: $(G'_1^{(1)}, G'_2^{(1)}, G'_3^{(1)}, G'_4^{(1)}, G'_5^{(1)})$ ... $(G'_{1(k5)}, G'_{2(k5)}, G'_{3(k5)}, G'_{4(k5)}, G'_{5(k5)})$ n=6: $(G''_1^{(1)}, G''_2^{(1)}, G''_3^{(1)}, G''_4^{(1)}, G''_5^{(1)}, G''_6^{(1)})$ ... $(G''_{1(k6)}, G''_{2(k6)}, G''_{3(k6)}, G''_{4(k6)}, G''_{5(k6)}, G''_{6(k6)})$

Jede Auswahl wie z.B. $(G''_1^{(1)}, G''_2^{(1)}, G''_3^{(1)}, G''_4^{(1)}, G''_5^{(1)}, G''_6^{(1)})$ bezeichnet eine mögliche Graphen- bzw. Chargenkombination zu fester Chargenanzahl, mit der sich die gewünschte Zielmenge $V_z$ des betrachteten Auftrags produzieren lässt. Es versteht sich, dass die Graphen zu verschiedenen Chargenanzahlen i.a. nicht gleich sind. Für eine Auswahl zu Chargenanzahl n wird im Folgenden allgemein $(G_1^{(i;n)}, G_2^{(i;n)}, G_3^{(i;n)}, G_4^{(i;n)},...G_n^{(i;n)})$ geschrieben, wobei der Index i alle I(n) Möglichkeiten für eine solche Auswahl durchläuft, i=1...I(n).

Jede einzelne ermittelte Graphen/Chargenkombination wird im Folgenden kurz als Kandidat bezeichnet und die Gesamtheit der Kandidaten bildet die zweite Kandidatenmenge $C_K^{(R)}$. Bei dem gewählten einfachen Beispiel mit genau einem Anlagenbelegungsgraph 26 pro Auftrag/Rezept wird jede Charge mit der durch diesen definierten Anlagenbelegung abgearbeitet.

Es ist ohne Weiteres einsehbar, dass die zweite Kandidatenmenge $C_K^{(R)}$ sehr umfangreich werden kann. Erst recht gilt das für eine dritte Kandidatenmenge $C_K$, die sich für alle Aufträge zusammen ergibt als Kombination (Kreuz-produkt) aller

$$C_K^{(R)} \; : \; C_K = \; C_K^{(R_1)} \; \otimes \; C_K^{(R_2)} \; \otimes \ldots \otimes \; C_K^{(R_p)}$$

Dieser Ausdruck bedeutet, dass eine beliebige Kombination von Anlagenbelegungsgraphen 26 zur Abarbeitung aller Chargen aller Aufträge sich stets ergibt durch (unabhängig mögliche) Auswahl je eines Satzes von Anlagenbelegungsgraphen 26 zur vollständigen Abarbeitung des Auftrags/Rezepts R.

Eine vollständige Bearbeitung der dritten Kandidatenmenge $C_K$ kann möglich sein, kann allerdings auch zu nicht mehr sinnvoll handhabbaren Verhältnissen und extremen Bearbeitungszeiten führen. Deshalb ist bei einer besonderen Ausführungsform des hier vorgeschlagenen Ansatzes vorgesehen, dass vor einer Weiterverarbeitung der dritten Kandidatenmenge $C_K$ eine grundsätzlich optionale gezielte Reduktion der dritten Kandidatenmenge $C_K$ stattfindet.

VII. Siebter Verfahrensschritt

Zur gezielten Reduktion der Kandidatenmenge $C_K$ wird in einem siebten Verfahrensschritt für jeden Kandidaten der Kandidatenmengen $C_K$ für alle zusammen zu bearbeitenden Aufträge ein im Folgenden als Überlappungskoeffizient bezeichneter charakteristischer Wert ermittelt. Dieser Schritt kann in dem Sinne als optional aufgefasst werden, dass der erlaubte Schwellwert dieses Überlappungskoeffizienten beliebig hoch gewählt werden kann, bis er effektiv keine Einschränkung mehr darstellt (dann findet natürlich auch keine Reduktion von $C_K$ mehr statt). Zur Definition des Reduktionsverfahrens muss man sich zunächst in Erinnerung rufen, dass bisher zunächst die erste Kandidatenmenge $M_K^{(R)}$ mit Anlagenbelegungsgraphen 26 und daraus dann die zweite Kandidatenmenge Menge $C_K^{(R)}$ und schließlich die dritte Kandidatenmenge $C_K$ ermittelt wurden. Eine konkrete Auswahl einer Anlagenbelegung ist bisher noch nicht erfolgt. Der Überlappungskoeffizient versucht, Engpässe abzubilden, die sich aus einer ungünstigen Anlagenbelegung ergeben können. Für jeden Auftrag kann eine Sequenz von Anlagenbelegungsgraphen 26 von der obigen Form $(G_1^{(i;n)}, G_2^{(i;n)}, G_3^{(i;n)}, G_4^{(i;n)},...G_n^{(i;n)})$ ausgewählt werden. Jeder jeweils verwendete Graph führt zu einer konkreten Belegung einzelner Anlagenteile 12-15 der Anlage 10. Der Einfachheit halber sei der Spezialfall nur eines einzigen Auftrags/Rezepts betrachtet, der in drei Chargen abgearbeitet werden soll. Für jede der Chargen wird ein Graph aus der ersten Kandidatenmenge $M_K$ ausgewählt (der Index (R)ist weggelassen, da nur ein einziges Rezept betrachtet wird). Für diese Graphen $G_1$, $G_2$ und $G_3$ hat man eine bestimmte Anlagenbelegung in einer Anlage 10 mit sechs als Anlagenteile 12-15 betrachteten Maschinen M1, M2, M3, M4, M5 und M6 wie folgt:

$G_1$: M1 -> M2 -> M4,
$G_2$: M1 -> M3 -> M4,

$G_3$: M1 -> M5 -> M6.

Die Maschine M1 wird also häufig benutzt, nämlich dreimal. Der in diesem Verfahrensschritt ermittelte Überlappungskoeffizient ist ein anlagenteilspezifischer Koeffizient und ergibt sich als gewichtete (die Gewichte sind parametrierbar) Summe über die (mit 1 subtrahierte) Anzahl, mit der eine Maschine oder ein Anlagenteil 12-15 in der ausgewählten Menge von Anlagenbelegungsgraphen 26 auftaucht. Dabei wird eine Maschine innerhalb eines Anlagenbelegungsgraphen 26, falls sie dort mehrfach vorkommt, nur einmal gezählt, es sei denn, die Maschine wird in parallelen Zweigen des Anlagenbelegungsgraphen 26 benutzt. Vorliegend ergeben sich bei einer Gewichtung jeweils mit dem Faktor 1 die Zahlenwerte K(M1)=3-1=2, K(M2)=1-1=0, K(M3)=0, K(M4)=1, K(M5)=0 und K(M6)=0, somit insgesamt K=3. Die dadurch in einer automatisch auswertbaren Form ausgedrückte häufige Verwendung der Maschine M1 deutet auf einen potentiellen Engpass bei der Benutzung der Anlage 10 hin, denn die betroffene Maschine M1 kann für mehrere Chargen nicht gleichzeitig, sondern nur sequentiell benutzt werden. In geringerem Maße gilt dies im Beispiel für die Maschine M4, insgesamt ergibt sich aber ein doch erheblicher Überlappungskoeffizient. Der Überlappungskoeffizient beschreibt eine mehrfache Benutzung von Anlagenteilen 12-15 über verschiedene Chargen hinweg und ggf. auch innerhalb einer Charge (s.o.) und ist damit ein Maß für eine solche mehrfache Benutzung. Abhängig von einem vom Anlagenfahrer festzulegenden Schwellwert für den Überlappungskoeffizienten, z.B. K=2, werden nun alle Elemente von $C_K$ verworfen, die diesen Wert überschreiten. Im vorliegenden Beispiel muss also die betrachtete Kombination $G_1$, $G_2$, $G_3$ verworfen werden.

Im allgemeinen Fall muss natürlich die Überlappung auch zwischen Anlagenbelegungsgraphen 26 verschiedener Aufträge mitbetrachtet werden.

VIII. Achter Verfahrensschritt

In einem achten Verfahrensschritt werden nun alle Kandidaten in der dritten Kandidatenmenge $C_K$ oder alle Kandidaten in der anhand von Überlappungskoeffizienten reduzierten dritten Kandidatenmenge $C_K$ des oder jedes Auftrags im Hinblick auf optimale Chargengrößen untersucht. Dabei wird die Optimierung separat für jede zugelassene Chargenanzahl und für jede mögliche Kombination von Graphen für diese Chargenanzahl durchgeführt. Dieser Schritt ist grundsätzlich optional; lässt man ihn weg, müssen die Chargenvolumina diskretisiert werden und es kann sich eine sehr hohe Zahl zu betrachtender Anlagenbelegungsgraphen 26 in $C_K$ ergeben.

Die $(V_{min}, V_{max})$-Bereiche der Chargenvolumina in jeder Graphen/Chargenkombination, die eine Produktion der Zielmenge $V_Z$ eines bestimmten Auftrags erlaubt, werden nun durch konkrete Volumina für jede Charge ersetzt. Dafür werden eine Optimierungsfunktion und ein grundsätzlich an sich bekannter Optimierungsalgorithmus, zum Beispiel ein genetischer Algorithmus, verwendet. Die Optimierungsfunktion kann sich zum Beispiel auf die Produktionskosten, insbesondere Produktionskosten inklusive Materialkosten, Personalkosten und Reinigungskosten, beziehen. Zusätzlich oder alternativ kann die Optimierungsfunktion die Produktionsdauer, also die Dauer der Abarbeitung aller Chargen des Auftrags, und/oder Qualitätsparameter, insbesondere von der Chargengröße abhängige Qualitätsparameter, berücksichtigen.

Während dieses Schritts wird kein weiterer Anlagenbelegungsgraph 26 aus der zweiten Kandidatenmenge $C_K^{(R)}$ entfernt. Es werden vielmehr allen noch verbliebenen Anlagenbelegungsgraphen 26 anstelle vorheriger Mengenbereiche $(V_{min}, V_{max})$ konkrete Mengen $(V_{Charge})$ zugewiesen.

Für jede Kombination resultierender Anlagenbelegungsgraphen 26 gibt es zunächst eine kontinuierlich-unendliche Vielzahl von Möglichkeiten, die zu der gewünschten Zielmenge $V_Z$ ($\sum V_{Charge}=V_Z$) führt. Man hat für jede Auswahl von Anlagenbelegungsgraphen $G_1^{(i;n)},... G_n^{(i;n)}$ ein Optimierungsproblem zu lösen von der Form $F_{vol}(G_1^{(i;n)},V_1^{(i;n)}; G_2^{(i;n)}, V_2^{(i;n)}; G_3^{(i;n)}, V_3^{(i;n)}; ... G_n^{(i;n)}, V_n^{(i;n)}) = max$, wobei $F_{vol}$ die im zweiten Verfahrensschritt konfigurierte Bewertungsfunktion zur Optimierung der Chargenvolumina ist, die direkt von den zu variierenden Chargenvolumina $V_1^{(i;n)}...V_n^{(i;n)}$ und indirekt von deren zugeordneten (festgehaltenen) Anlagenbelegungsgraphen $G_1^{(i;n)}...G_n^{(i;n)}$ abhängt. (Im einfachen Beispiel des sechsten Verfahrensschritts waren die Chargenvolumina mit $a_1$, $b_1$, $c_1$, $d_1$ usw. bezeichnet). Das heißt, die Gestalt der Bewertungsfunktion kann grundsätzlich abhängen von der Auswahl der Anlagenbelegungsgraphen 26, die Variablen der Optimierung sind jedoch stets nur die Volumina $V_1^{(i;n)}...V_n^{(i;n)}$. Das zur Optimierung anzuwendende Verfahren richtet sich sinnvollerweise nach der Form der Bewertungsfunktion. Für eine lineare Bewertungsfunktion lässt sich das Problem mit einem Standard-Simplex-Algorithmus exakt und schnell lösen, da auch die Randbedingung $\sum V_{Charge} \equiv V_1^{(i;n)}+ ... + V_n^{(i;n)} = V_Z$ linear ist und es sich somit um ein LP-Problem handelt. Für nichtlineare Bewertungsfunktionen wird man üblicherweise ein heuristisches Optimierungsverfahren wählen, zum Beispiel einen genetischen Algorithmus.

Die Auswahl einer Möglichkeit aus der Vielzahl der Möglichkeiten mit Hilfe der Optimierung reduziert den bisherigen Lösungsraum. Die Optimierung ist dabei nicht darauf gerichtet, verschiedene Sätze von Anlagenbelegungsgraphen 26 einer Graphen/Chargenkombination miteinander zu vergleichen und als Ergebnis bis auf einen Satz von Anlagenbelegungsgraphen 26 alle anderen Sätze von Anlagenbelegungsgraphen 26 zu verwerfen. Dies könnte nämlich zu einer Situation führen, bei der nur eine begrenzte Anzahl der tatsächlich von der Anlage 10 umfassten Anlagenteile 12-15 benutzt werden, weil dies aus Kostengründen durchaus grundsätzlich sinnvoll ist. Eine Verwendung nur einer begrenzten Anzahl der tatsächlich verwendbaren Anlagenteile 12-15 führt aber bei der nachfolgenden Ausführung des Schedulers zu der Situation, dass nur diese Anlagenteile 12-15 für die Lösung des Scheduling-Problems berücksichtigt werden und sich damit (neben der ungünstigen Auslastung der Gesamtanlage 10) erhöhte Ausführungszeiten ergeben.

Die erwähnte Optimierung bewahrt also alle verwendbaren Anlagenteile 12-15 und Anlagenbelegungsgraphen 26 für die spätere Lösung des Scheduling-Problems. Das Ergebnis dieses Verfahrensschritts sind einerseits optimale Chargenkombinationen (batch sets) mit konkreten, jeweils produzierbaren Mengen $V_{Charge}$ sowie damit jeweils implizit verbundene (und automatisch ermittelbare) Zeitwerte für die Belegung einzelner Anlagenteile 12-15 und für die Belegung zwischen solchen Anlagenteilen 12-15 bestehender Verbindungen 18. Das Ergebnis dieses Verfahrensschritts sind andererseits auch optimierte Chargengrößen $V_{Charge}$, wobei die Chargengrößen $V_{Charge}$ bezüglich einer jeweiligen Chargenkombination mit einer festen Anzahl von Chargen optimiert sind.

Die materialverfügbarkeitsbezogenen Randbedingungen (Nr. 6) sind bisher noch nicht berücksichtigt worden. Dies erfolgt im Rahmen des folgenden Teilschritts.

Für jede Zusammenstellung sich ergebender Kandidaten (optimierte Graphen/Chargenkombination zu einer gegebenen Anzahl von Chargen) für alle zu erfüllenden Aufträge wird nun geprüft, ob die Randbedingung gemäß Nr. 5. (Materialverfügbarkeit) erfüllt werden kann. Wegen der im Allgemeinen nichtlinearen Natur der Skalierungsbedingungen gemäß Nr. 4. kann dieser Schritt quantitativ genau erst nach Bestimmung der Chargengrößen $V_{Charge}$ durchgeführt werden. Sollte die Menge der verfügbaren Materialien zumindest teilweise nicht ausreichen, so wird der Kandidat verworfen. Findet sich gar kein Kandidat, für den die verfügbaren Materialien ausreichen, so wird gemäß Priorisierung der Aufträge im Verfahrensschritt IV zunächst der Auftrag mit der geringsten Priorität verworfen und erneut geprüft. Dies wird ggf. fortgesetzt, bis die Abarbeitung der verbleibenden Aufträge möglich wird. Das Ergebnis der Analyse wird dem Anlagenfahrer angezeigt, also die fehlenden Materialmengen bzw. die niederprioren Aufträge, die aufgegeben werden müssten. Der Anlagenfahrer kann nun entscheiden, entweder die Materialvorräte aufzustocken, reduzierte Mengen für niederpriore Aufträge zu akzeptieren, oder die vom System vorgeschlagenen niederprioren Aufträge fallenzulassen.

Sollten Kombinationen von Anlagenteilen 12-15 in der am Ende der Erläuterung des Verfahrensschritts V beschriebenen Art zugelassen worden sein, so wird anhand der bestimmten Chargenvolumina $V_{Charge}$ geprüft, ob (wiederum gemäß der konfigurierten Verwendungspriorisierung) Anlagenteile 12-15 aus Kombinationen von Anlagenteilen 12-15 wieder freigegeben werden können, weil ihre Kapazität nicht benötigt wird. Nur die entsprechend reduzierten Kombinationen werden im nachfolgenden Verfahrensschritt dem Scheduler übergeben.

IX. Neunter Verfahrensschritt

Zur Planung einer konkreten Anlagenbelegung, welche nicht nur die Belegungsreihenfolge gemäß einem Anlagenbelegungsgraph 26, sondern auch konkrete Zeitabschnitte für die Benutzung der einzelnen Anlagenteile 12-15 umfasst, wird in einem abschließenden neunten Verfahrensschritt ein grundsätzlich an sich bekannter Scheduler verwendet. Ein solcher Scheduler erstellt auf Basis eines heuristischen Verfahrens einen Zeitplan für die konfliktfreie Benutzung der einzelnen Anlagenteile 12-15, der bei dessen Abarbeitung zu einer Erfüllung des oder jedes jeweils vorliegenden Auftrags führt.

Bei einer Situation mit mehreren Aufträgen hat man als Input für den Scheduler für jeden einzelnen Auftrag $A_1$ mit Rezept $R_1$ bis $A_p$ mit Rezept $R_p$ eine bestimmte erste Kandidatenmenge $M_{K(R1)}$ .. $M_{K(Rp)}$ ($A_z$) mit Anlagenbelegungsgraphen 26, sowie eine dritte Kandidatenmenge $C_K = C_{K(R1)} \otimes ... \otimes C_{K(Rp)}$ von Graphen/ Chargenkombinationen mit optimierten Chargengrößen $V_1^{(opt\ i;n)} ... V_n^{(opt\ i;n)}$. Eine Erstellung eines Zeitplans mittels des Schedulers für eine solche Situation führt, bei Bevorzugung früher Fertigstellung, zu einer so weit wie möglich parallel erfolgenden Abarbeitung der Aufträge und/oder der jeweiligen einzelnen Chargen.

Der vom Scheduler erzeugte Zeitplan kann anschließend für jede der Vielzahl von möglichen Kombinationen von Anlagenbelegungsgraphen 26 bewertet werden (dies kann durch Parallelisierung der Berechnung effizient behandelt werden). Auch die Anzahl der Chargen pro Auftrag variiert dabei. Eine automatische Bewertung ist zum Beispiel anhand der im zweiten Verfahrensschritt definierten Zielfunktion, die zum Beispiel auf die gesamte Produktionsdauer zur Abarbeitung aller Aufträge ausgerichtet sein kann, möglich. Die Bewertungsergebnisse aller Kombinationen werden verglichen und das Beste führt zur Auswahl der entsprechenden Kombination.

Sollte sich dennoch kein ausreichend gutes Ergebnis des Schedulers ergeben, kann eine Erweiterung der Datenbasis (zweite Kandidatenmenge $C_K^{(R)}$) erfolgen, zum Beispiel indem zurück vor den sechsten Verfahrensschritt verzweigt wird, das Verfahren ab dem sechsten Verfahrensschritt erneut ausgeführt wird und dabei die vorgegebene maximale Chargenanzahl erhöht wird. Dann ergibt sich eine zweite Kandidatenmenge $C_K^{(R)}$ mit zusätzlichen, bisher nicht betrachteten Kandidaten. Es wird also der Lösungsraum erweitert. Die modifizierte zweite Kandidatenmenge $C_K^{(R)}$ ist erneut die Basis für eine Ermittlung optimaler Chargengrößen wie oben beschrieben. Damit kann sich eine neue Basis für den Scheduler ergeben, die eventuell zu einem günstigeren Ergebnis bezüglich der für den Scheduler definierten Zielfunktion führt.

Alternativ kann auch zurück vor den siebten Verfahrensschritt verzweigt werden und das Verfahren ab dem siebten Verfahrensschritt erneut ausgeführt werden, wobei eine zulässige Obergrenze für den Überlappungskoeffizienten heraufgesetzt wird und die Reduzierung der dritten Kandidatenmenge $C_K$ mit dem erhöhten Überlappungskoeffizienten erneut ausgeführt wird. Schließlich können auch "suboptimale" Wahlen der Chargengrößen (vgl. Schritt VIII) zugelassen werden. In allen Fällen ergibt sich eine Kandidatenmenge $C_K$ mit zusätzlichen Kandidaten. Wenn von der in der einleitenden Beschreibung genannten Möglichkeit der Reduktion der ersten Kandidatenmenge $M_K^{(R)}$ Gebrauch gemacht wurde, kann natürlich auch diese teilweise zurückgenommen werden. Die Möglichkeiten sind auch kombinierbar.

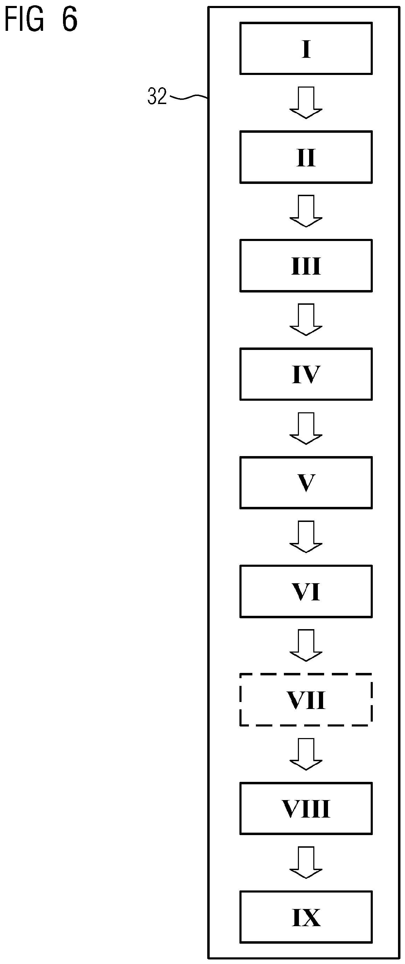

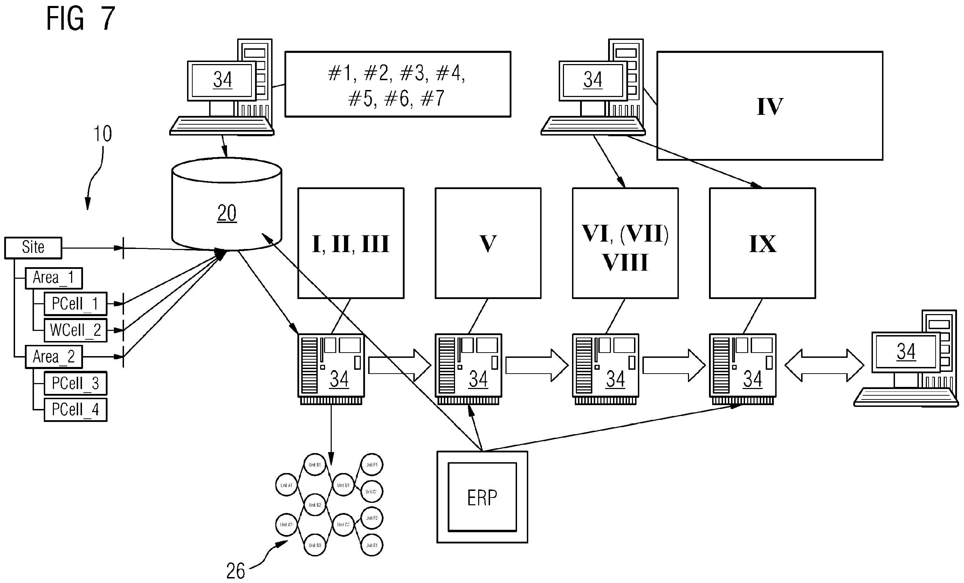

Die Darstellung in FIG 6 zeigt die erläuterten Verfahrensschritte I bis IX in einem schematisch vereinfachten Ablaufdiagramm. Eine Implementation aller Verfahrensschritte I bis IX in Software ist ein Computerprogramm 32 (ggf. ein verteiltes Computerprogramm) und ein solches Computerprogramm 32 fungiert als Mittel zur Ausführung des hier beschriebenen Ansatzes. Ein solches Computerprogramm 32 wird in grundsätzlich an sich bekannter Art und Weise auf einer für dessen Ausführung geeigneten Hardware (ggf. einer verteilten Hardware) ausgefügt. Die Hardware umfasst zumindest einen Computer 34 (FIG 7) oder dergleichen, ggf. einen Computer 34 in Form eines zur Steuerung und/oder Überwachung einer technischen Anlage 10 vorgesehenen Automatisierungsgeräts. Ein solcher Computer 34 umfasst in an sich bekannter Art und Weise einen Speicher, in den das Computerprogramm 32 zur Ausführung des Verfahrens geladen ist, sowie eine Verarbeitungseinheit in Form von oder nach Art eines Mikroprozessors zur Ausführung des Computerprogramms 32.

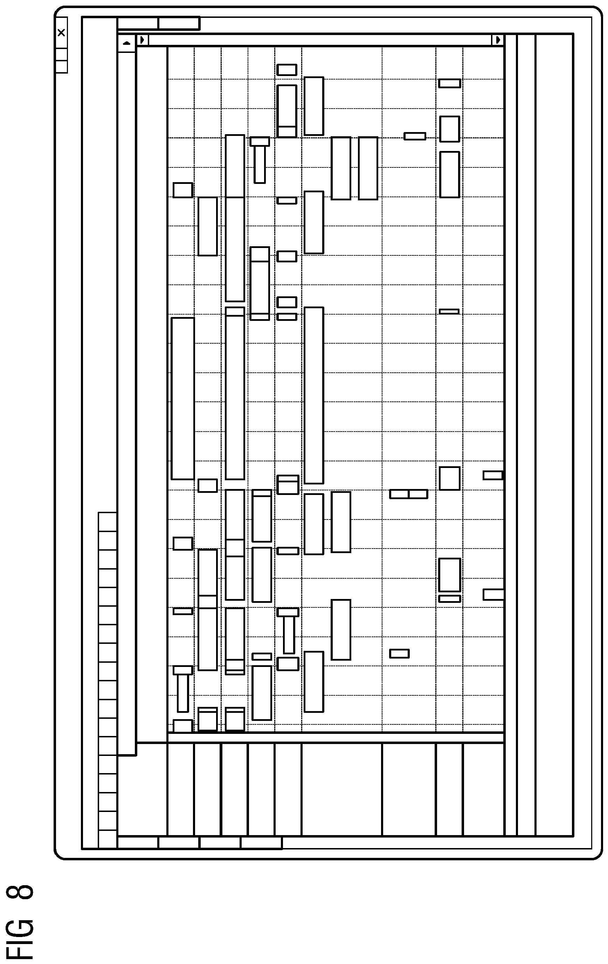

Abschließend zeigt FIG 7 eine Übersichtsdarstellung des hier vorgeschlagenen Ansatzes. Diese ist von links nach rechts zu lesen. Ganz links ist die Anlage 10 mit den davon umfassten Anlagenteilen 12-15 in Form eines Baums gezeigt. Die die Anlage 10 beschreibenden Daten gehen zusammen mit den eingangs erwähnten Randbedingungen, die symbolisch als "#1" bis "#7" gezeigt sind, in die Datenbasis 20 ein. Die Ausführung der einzelnen Verfahrensschritte ist (von links nach rechts) in Form einer Angabe der Nummern der jeweiligen Verfahrensschritte dargestellt. Im Rahmen einer Ausführung des ersten, zweiten und dritten Verfahrensschritts (I, II, III) werden die statischen Randbedingungen Nr. 1 und Nr. 2 sowie teilweise Nr. 3 und Nr. 4 sowie die Daten des oder jedes aufgrund des oder jedes Auftrags abzuarbeitenden Rezepts ausgewertet. Das Ergebnis ist zumindest ein Anlagenbelegungsgraph 26. Im vierten Verfahrensschritt (IV) werden Zielfunktionen für die Optimierung eingegeben. Im fünften Verfahrensschritt (V) werden auf Basis von sich zum Beispiel aufgrund von ERP-Daten ergebenen Auftragsdaten die Produktionsmengenbereiche und die Kandidatenmenge $C_K$ ermittelt, wiederum unter Verwendung der Randbedingungen gemäß Nr. 3 und Nr. 4. In zumindest einem weiteren achten Verfahrensschritt (VIII) erfolgt unter vorheriger Ausführung des sechsten Verfahrensschritts (VI) und des siebten Verfahrensschritts (VII) eine Ermittlung optimaler Chargengrößen. In einem abschließenden neunten Verfahrensschritt (IX) erfolgt mittels des Schedulers die Ermittlung eines Zeitplans zur Abarbeitung des oder jedes Auftrags. Die Darstellung in FIG 8 zeigt eine schematisch vereinfachte Darstellung eines resultierenden Zeitplans. Dieser kann zwecks Bewertung durch einen Anwender des Verfahrens an einem Bildschirm angezeigt werden. Der Zeitplan bildet die Grundlage für die automatische Steuerung der Anlage 10 zur Abarbeitung des oder jedes Auftrags. Diese automatische Steuerung der Anlage 10 umfasst eine grundsätzlich an sich bekannte Ansteuerung der davon umfassten Anlagenteile 12-15, die hier keiner weiteren Erläuterung bedarf.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur Optimierung von Chargenprozessen, ein Computerprogramm 32 mit einer Implementierung des Verfahrens und ein nach dem Verfahren arbeitendes System. Im Rahmen des Verfahrens werden automatisch - also gemäß dem Computerprogramm 32 und unter Kontrolle des Computerprogramms 32 - zumindest ein Anlagenbelegungsgraph 26, zumindest ein Produktionsmengenbereich, Kandidatenmengen ($M_K^{(R)}$, $C_K^{(R)}$, $C_K$), optimale Chargengrößen und eine optimale Chargenanzahl auf Basis einer der Kandidatenmengen $M_K^{(R)}$, $C_K^{(R)}$, $C_K$ sowie ein Zeitplan zur Abarbeitung eines Auftrags mit der ermittelten optimalen Chargenanzahl und der ermittelten optimalen Chargengröße auf von einem Anlagenbelegungsgraph 26 referenzierten Anlagenteilen 12-15 ermittelt.

**Patentansprüche**

1. Verfahren zur automatischen Optimierung von Chargenprozessen zur Abwicklung zumindest eines Auftrags in Form einer Abarbeitung zumindest eines Rezepts auf einer Anlage (10), welche eine Mehrzahl von Anlagenteilen (12-15) umfasst, wobei das Verfahren die folgenden Schritte umfasst:

   Auswertung vorgegebener oder vorgebbarer statischer und/oder dynamischer Randbedingungen;

Generierung zumindest eines Anlagenbelegungsgraphen (26) auf Basis der Randbedingungen sowie eines vorgegebenen oder vorgebbaren Prozessgraphen (22), wobei der Anlagenbelegungsgraph (26) einzelne Anlagenteile (12-15) der Anlage (10) referenziert;

Ermittlung von Produktionsmengenbereichen auf Basis des oder jedes Anlagenbelegungsgraphen (26) und für den oder jeden Anlagenbelegungsgraphen (26);

Bildung einer den oder jeden Anlagenbelegungsgraphen (26) und eine damit verbundene Produktionsmenge oder einen damit verbundenen Produktionsmengenbereich umfassenden ersten Kandidatenmenge $M_K^{(R)}$;

Bildung zumindest einer zweiten Kandidatenmenge $C_K^{(R)}$ auf Basis der ersten Kandidatenmenge $M_K^{(R)}$, welche alle zur Abarbeitung des Auftrags zu genau einem Rezept geeigneten Kombinationen von Anlagenbelegungsgraphen (26) aus der ersten Kandidatenmenge $M_K^{(R)}$ umfasst;

Ermittlung optimaler Chargengrößen $V_{Charge}$ auf Basis der zweiten Kandidatenmenge $C_K^{(R)}$;

Bildung einer dritten Kandidatenmenge $C_K$ als Kombination der zweiten Kandidatenmengen $C_K^{(R)}$ zu jedem Rezept R;

Ermittlung eines Zeitplans zur Abarbeitung des zumindest einen Auftrags mit den ermittelten optimalen Chargengrößen $V_{Charge}$ auf den von einem jeweils zugrunde liegenden Anlagenbelegungsgraph (26) referenzierten Anlagenteilen (12-15) für jedes Element von $C_K$ sowie

Ermittlung des besten Zeitplans und des besten Elements von $C_K$ durch Vergleich der erzielten Bewertungsergebnisse bezüglich einer vorgegebenen oder vorgebbaren Bewertungsfunktion.

2. Verfahren nach Anspruch 1,
wobei für jedes Element der dritten Kandidatenmenge $C_K$ ein Überlappungskoeffizient ermittelt wird und alle Elemente der Kandidatenmenge $C_K$ mit einem einen vorgegebenen oder vorgebbaren Schwellwert überschreitenden Überlappungskoeffizient aus der dritten Kandidatenmenge $C_K$ gelöscht werden.

3. Verfahren nach Anspruch 1 oder 2,
wobei beginnend mit einer vorgegebenen oder vorgebbaren minimalen Chargenanzahl und endend mit einer vorgegebenen oder vorgebbaren maximalen Chargenanzahl schrittweise für eine jeweilige Chargenanzahl alle möglichen Kombinationen von Produktionsmengen ermittelt werden, die zu einer aufgrund eines Auftrags resultierenden Zielmenge $V_z$ führen und wobei die ermittelten Kombinationen die Elemente der zweiten Kandidatenmenge $C_K^{(R)}$ bilden.

4. Verfahren nach Anspruch 2 oder 3,
wobei zur Erweiterung eines Lösungsraums für einen zur Ermittlung des Zeitplans bestimmten Scheduler der Schwellwert für den Überlappungskoeffizient und/oder die maximale Chargenanzahl erhöht wird.

5. Verfahren nach einem der Ansprüche 1 bis 4,
wobei für die Ermittlung optimaler Chargengrößen ein eine Zielfunktion berücksichtigendes exaktes oder heuristisches Optimierungsverfahren verwendet wird.

6. Computerprogramm (32) mit Programmcodemitteln, um alle Schritte von jedem beliebigen der Ansprüche 1 bis 5 durchzuführen, wenn das Computerprogramm (32) auf einem Computer (34) ausgeführt wird.

7. Computer (34) mit einer Verarbeitungseinheit und einem Speicher, in den ein Computerprogramm (32) nach Anspruch 6 geladen ist, das beim Betrieb des Computers (34) aus dessen Speicher geladen und durch dessen Verarbeitungseinheit ausgeführt wird.

FIG 1

FIG 2

FIG 3

FIG 4

FIG 5

FIG 6

32

```
┌─────────────┐
│      I      │
└─────────────┘
       ⇩
┌─────────────┐
│     II      │
└─────────────┘
       ⇩
┌─────────────┐
│     III     │
└─────────────┘
       ⇩
┌─────────────┐
│     IV      │
└─────────────┘
       ⇩
┌─────────────┐
│      V      │
└─────────────┘
       ⇩
┌─────────────┐
│     VI      │
└─────────────┘
       ⇩
┌ ─ ─ ─ ─ ─ ─ ┐
     VII
└ ─ ─ ─ ─ ─ ─ ┘
       ⇩
┌─────────────┐
│    VIII     │
└─────────────┘
       ⇩
┌─────────────┐
│     IX      │
└─────────────┘
```

FIG 7

#1, #2, #3, #4,
#5, #6, #7

IV

10

20

Site

Area_1

PCell_1

WCell_2

Area_2

PCell_3

PCell_4

I, II, III

V

VI, (VII) VIII

IX

ERP

26

EP 3 441 915 A1

FIG 8

Europäisches
Patentamt

European
Patent Office

Office européen
des brevets

**EUROPÄISCHER RECHERCHENBERICHT**

Nummer der Anmeldung

EP 17 18 5450

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG   (IPC) |
|---|---|---|---|
| X | DE 10 2012 217421 A1 (SIEMENS AG [DE]) 27. März 2014 (2014-03-27) * Zusammenfassung * * Absatz [0003] - Absatz [0004] * * Absatz [0009] * ----- | 1-7 | INV. G06Q10/04 |
| X | DE 10 2012 112369 A1 (KRONES AG [DE]) 18. Juni 2014 (2014-06-18) * Zusammenfassung * * Absatz [0001] - Absatz [0004] * ----- | 1-7 | |

**RECHERCHIERTE SACHGEBIETE   (IPC)**

G06Q

Der vorliegende Recherchenbericht wurde für alle Patentansprüche erstellt

| Recherchenort | Abschlußdatum der Recherche | Prüfer |
|---|---|---|
| München | 21. September 2017 | Moltenbrey, Michael |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 18 5450

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2017

| Im Recherchenbericht angeführtes Patentdokument | Datum der Veröffentlichung | Mitglied(er) der Patentfamilie | Datum der Veröffentlichung |
|---|---|---|---|
| DE 102012217421 A1 | 27-03-2014 | DE 102012217421 A1<br>WO 2014048729 A1 | 27-03-2014<br>03-04-2014 |
| DE 102012112369 A1 | 18-06-2014 | CN 104937507 A<br>DE 102012112369 A1<br>EP 2932336 A1<br>US 2015332190 A1<br>WO 2014095938 A1 | 23-09-2015<br>18-06-2014<br>21-10-2015<br>19-11-2015<br>26-06-2014 |